# EUROPEAN PATENT APPLICATION

(11) **EP 4 443 550 A1**
(43) Date of publication of application: **09.10.2024**
(21) Application number: 22901058.2
(22) Date of filing: 11.11.2022
(51) Int. Cl.: H01M 4/36, H01G 11/42, H01G 11/86, H01M 4/505, H01M 4/525, H01M 4/58

(54) **COMPOSITE PARTICLES AND PRODUCING METHOD THEREOF, ELECTRODE FOR ELECTROCHEMICAL DEVICE, AND ELECTROCHEMICAL DEVICE**

(30) Priority: 30.11.2021 JP 2021194941
(71) Applicant: Zeon Corporation, Tokyo 100-8246 (JP)
(72) Inventor: ITO, Yukie, Tokyo 100-8246 (JP); ISSHIKI, Yasuhiro, Tokyo 100-8246 (JP)
(74) Representative: Maiwald GmbH
(86) International application number: PCT/JP2022/042141
(87) International publication number: WO 2023/100625

(57) **Abstract**

Composite particles contain electrode active material particles, a conductive material, and a binder. The electrode active material particles have a number-based median diameter of primary particles of not less than 0.2 µm and not more than 4.0 µm . The composite particles have a D50 of not less than 20 µm and not more than 250 µm and a D90/D10 of not less than 2 and not more than 30 in a volume-based particle diameter distribution. The proportion constituted by carbon atoms at surfaces of the composite particles is not less than 20 mass% and not more than 70 mass%.

## Description

### TECHNICAL FIELD

The present disclosure relates to composite particles and a method of producing the same, an electrode for an electrochemical device, and an electrochemical device.

### BACKGROUND

Electrochemical devices such as lithium ion secondary batteries have characteristics such as compact size, light weight, high energy-density, and the ability to be repeatedly charged and discharged, and are used in a wide variety of applications.

Various improvements are being made to materials used to form electrodes for electrochemical devices with the aim of improving electrochemical device performance. An electrode for an electrochemical device has a structure in which an electrode mixed material layer is disposed on an electrode substrate. The electrode mixed material layer contains an electrode active material as a main component and may contain other components such as a conductive material and a binder as necessary in order to impart characteristic functions such as electrical conductivity, close adherence, and flexibility to the electrode.

Among materials used to form electrodes for electrochemical devices that have been the subject of various previous improvements, electrode active materials have, more specifically, been the subject of optimization of density, particle diameter, and so forth in an attempt to enhance characteristics of an obtained electrochemical device (for example, refer to Patent Literature (PTL) 1 and 2).

### CITATION LIST

### Patent Literature

PTL 1: JP2004-311427A
PTL 2: WO2013/076958A1

### SUMMARY

### (Technical Problem)

However, there is room for further improvement of conventional electrode active materials in terms of area density stability and rollability of an obtained electrode.

Accordingly, one object of the present disclosure is to provide composite particles that can increase area density stability and rollability of an obtained electrode and a method of producing these composite particles.

Another object of the present disclosure is to provide an electrode for an electrochemical device that has excellent area density stability and rollability and an electrochemical device that includes this electrode for an electrochemical device.

### (Solution to Problem)

The inventors conducted diligent investigation with the aim of solving the problems described above. The inventors made a new discovery that excellent area density stability and rollability are achieved when an electrode is formed using composite particles that contain electrode active material particles having a primary particle median diameter within a specific range, that have a value within a specific range for D50 and a value within a specific range for D90/D10 in a volume-based particle diameter distribution of the composite particles, and in which the proportion constituted by carbon atoms at surfaces of the composite particles is within a specific range. In this manner, the inventors completed the present disclosure.

Specifically, with the aim of advantageously solving the problems set forth above, [1] presently disclosed composite particles comprise electrode active material particles, a conductive material, and a binder, wherein the electrode active material particles have a number-based median diameter of primary particles of not less than 0.2 µm and not more than 4.0 µm, the composite particles having a D50 of not less than 20 µm and not more than 250 µm and a D90/D10 of not less than 2 and not more than 30 in a volume-based particle diameter distribution, and a proportion constituted by carbon atoms at surfaces of the composite particles is not less than 20 mass% and not more than 70 mass%. An electrode that is formed using composite particles that satisfy the various attributes set forth above has excellent area density stability and rollability. Moreover, an electrochemical device that includes this electrode has excellent high-temperature storage characteristics.

Note that the "number-based median diameter of primary particles of electrode active material particles", "volume-based particle diameter distribution of composite particles", and "proportion constituted by carbon atoms at surfaces of composite particles" that are referred to in the present disclosure can be measured by methods described in the EXAMPLES section of the present specification.

[2] In the composite particles according to the foregoing [1], the electrode active material particles preferably have a true specific gravity of not less than 3.5 and not more than 6.0. Composite particles satisfying this condition result in even better area density stability and rollability of an obtained electrode. Moreover, an electrochemical device that includes this electrode has even better high-temperature storage characteristics.

Note that the "true specific gravity of electrode active material particles" referred to in the present disclosure can be measured in accordance with JIS Z 8807:2012.

[3] In the composite particles according to the foregoing [1] or [2], it is preferable that the electrode active material particles contain one or more elements selected from the group consisting of Al, Zr, W, Ti, Mg, Ta, Nb, Mo, Ir, Sc, V, Cr, and Hf, and a proportion constituted by the one or more elements in the electrode active material particles is not less than 0.05 mol% and not more than 2.0 mol%. When the electrode active material particles contain one or more of these elements in the proportion set forth above, an obtained electrode has even better area density stability and rollability. Moreover, an electrochemical device that includes this electrode has even better high-temperature storage characteristics.

Note that it is possible to confirm "whether or not electrode active material particles contain any of the above-described elements" and to measure the "proportion constituted by the above-described elements in electrode active material particles" through SEM/EDX (scanning electron microscopy/energy dispersive X-ray spectroscopy) according to a method described in the EXAMPLES section of the present specification.

[4] Moreover, with the aim of advantageously solving the problems set forth above, a presently disclosed method of producing composite particles is a method of producing composite particles containing electrode active material particles, a conductive material, and a binder, comprising: performing preliminary stirring by stirring a powder material containing electrode active material particles having a number-based median diameter of primary particles of not less than 0.2 µm and not more than 4 µm to place the powder material in a stirred state; and performing stirring granulation by adding a binder to the powder material in the stirred state and obtaining composite particles having a D50 of not less than 20 µm and not more than 250 µm and a D90/D10 of not less than 2 and not more than 30 in a volume-based particle diameter distribution. An electrode that is formed using composite particles produced according to a production method such as set forth above has excellent area density stability and rollability. Moreover, an electrochemical device that includes this electrode has excellent high-temperature storage characteristics.

[5] In the method of producing composite particles according to the foregoing [4], it is preferable that aggregates of the electrode active material particles are caused to disintegrate in the presence of a conductive material in the preliminary stirring. By causing disintegration of aggregates of the electrode active material particles in the presence of a conductive material in the preliminary stirring, it is possible to efficiently produce composite particles and to increase the quality of the obtained composite particles.

[6] In the method of producing composite particles according to the foregoing [5], the preliminary stirring can be performed as a dry process.

[7] In the presently disclosed production method according to the foregoing [4], a conductive material that is dispersed in a solvent can be added to the powder material in the stirred state in the stirring granulation.

[8] Furthermore, with the aim of advantageously solving the problems set forth above, a presently disclosed electrode for an electrochemical device comprises an electrode mixed material layer containing the composite particles for an electrochemical device according to any one of the foregoing [1] to [3]. When an electrode includes an electrode mixed material layer containing any of the composite particles for an electrochemical device set forth above, this electrode has even better area density stability and rollability.

[9] Also, with the aim of advantageously solving the problems set forth above, a presently disclosed electrochemical device comprises the electrode for an electrochemical device according to the foregoing [8]. This electrochemical device has excellent high-temperature storage characteristics.

### (Advantageous Effect)

According to the present disclosure, it is possible to provide composite particles that can increase area density stability and rollability of an obtained electrode and a method of producing these composite particles.

Moreover, according to the present disclosure, it is possible to provide an electrode for an electrochemical device that has excellent area density stability and rollability and an electrochemical device that includes this electrode for an electrochemical device.

### BRIEF DESCRIPTION OF THE DRAWINGS

In the accompanying drawings:
FIG. 1 is a plan view of a granulation tank according to an example; and
FIG. 2 is a cross-sectional view at a sectioning line A-A indicated in FIG. 1.

### DETAILED DESCRIPTION

The following provides a detailed description of embodiments of the present disclosure.

The presently disclosed composite particles can advantageously be used as a component compounded in an electrode mixed material layer that is included in an electrode of an electrochemical device such as a secondary battery. Moreover, the presently disclosed composite particles can efficiently be produced according to the presently disclosed method of producing composite particles.

### (Composite particles)

The presently disclosed composite particles contain electrode active material particles, a conductive material, and a binder. The electrode active material particles that are contained in the presently disclosed composite particles have a number-based median diameter of primary particles of not less than 0.2 µm and not more than 4 µm. Moreover, the presently disclosed composite particles have a D50 of not less than 20 µm and not more than 250 µm and a D90/D10 of not less than 2 and not more than 30 in a volume-based particle diameter distribution, and a proportion constituted by carbon atoms at surfaces of the composite particles is not less than 20 mass% and not more than 70 mass%. Composite particles that contain electrode active material particles having a primary particle size that satisfies a specific condition and that themselves have a particle diameter distribution and surface properties that satisfy specific conditions in this manner result in excellent area density stability and rollability when used to form an electrode. Note that when an electrode is said to "have excellent area density stability" in the present specification, this means that unevenness of component distribution in the electrode is suppressed and that the electrode has excellent uniformity. Moreover, when an electrode is said to "have excellent rollability" in the present specification, this means that the electrode is easily densified when subjected to pressing. Furthermore, an electrochemical device that includes an electrode satisfying such characteristics has excellent high-temperature storage characteristics.

### <Electrode active material particles>

The electrode active material particles are required to have a number-based median diameter of primary particles of not less than 0.2 µm and not more than 4.0 µm . Moreover, the number-based median diameter of primary particles is preferably 0.5 µm or more, and more preferably 1.0 µm or more, and is preferably 3.5 µm or less, and more preferably 3.0 µm or less. When the number-based median diameter of primary particles is not less than any of the lower limits set forth above, high-temperature storage characteristics of an obtained electrochemical device can be enhanced. Moreover, when the number-based median diameter of primary particles is not more than any of the upper limits set forth above, rollability of an obtained electrode can be increased.

The electrode active material particles (positive electrode active material particles or negative electrode active material particles) are not specifically limited so long as they satisfy the above-described essential condition relating to primary particle size and can, for example, be particles that contain a known electrode active material and optionally have a coating layer coating the surface of the electrode active material.

Of such electrode active material particles, electrode active material particles that contain one or more elements selected from the group consisting of Al, Zr, W, Ti, Mg, Ta, Nb, Mo, Ir, Sc, V, Cr, and Hf are preferable. In particular, it is preferable that the electrode active material particles contain one or more elements from among Zr, W, and Ti. More specifically, it is preferable that the electrode active material particles have any of these elements at surfaces thereof.

The proportion constituted by the above-listed elements in the electrode active material particles is preferably 0.05 mol% or more, more preferably 0.1 mol% or more, and even more preferably 0.2 mol% or more, and is preferably 2.0 mol% or less, more preferably 1.5 mol% or less, and even more preferably 1.0 mol% or less. When the proportion constituted by the listed elements is not less than any of the lower limits set forth above, rollability of an obtained electrode can be even further increased. Moreover, when the proportion constituted by the listed elements is not more than any of the upper limits set forth above, area density stability of an obtained electrode and high-temperature storage characteristics of an electrochemical device including the electrode can be even further enhanced. Note that in a case in which a plurality of types of target elements are detected in analysis of the electrode active material by a method described in the EXAMPLES section, the total amount of those elements preferably satisfies any of the ranges set forth above.

Examples of positive electrode active materials that may form positive electrode active material particles used in a lithium ion secondary battery include lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium manganese phosphate (LiMnPO₄), olivine-type lithium iron phosphate (LiFePO₄), and a lithium-rich spinel compound represented by Li₁₊ₓMn₂₋ₓO₄ (0 < x < 2). One of these positive electrode active materials may be used individually, or two or more of these positive electrode active materials may be used in combination in a freely selected ratio. From a viewpoint of even further improving high-temperature storage characteristics of an obtained electrochemical device, the positive electrode active material is preferably a positive electrode active material that contains nickel and cobalt and that further contains at least one of manganese and aluminum, and is more preferably a lithium-containing complex oxide of Co-Ni-Mn or a lithium-containing complex oxide of Ni-Co-Al. Note that the electrode active material particles may have a coating layer of a different chemical composition to the electrode active material that is disposed on at least part of the surface of the electrode active material as previously described. The coating layer may partially cover the surfaces of the electrode active material particles or may completely cover the surfaces of the electrode active material particles. Moreover, the various elements listed above as elements that may suitably be present at the surfaces of the electrode active material particles may be contained in the electrode active material particles themselves and/or may be contained in the coating layer.

In a case in which the electrode active material particles have a coating layer, the coating layer can be composed of one or more selected from the group consisting of zirconium oxide (ZrO₂), aluminum oxide (Al₂O₃), boron oxide (B₂O₃), and phosphorus oxide (P₂O₅, P₄O₁₀), for example.

The true specific gravity of the electrode active material particles is preferably 3.5 or more, more preferably 4.0 or more, and even more preferably 4.3 or more, and is preferably 6.0 or less. When the true specific gravity of the electrode active material particles is not less than any of the lower limits set forth above, high-temperature storage characteristics of an obtained electrochemical device can be even further enhanced. Moreover, when the true specific gravity of the electrode active material particles is not more than the upper limit set forth above, area density stability of an obtained electrode can be even further increased.

### <Conductive material>

Examples of conductive materials that may be used as the conductive material include, but are not specifically limited to, conductive carbon materials such as carbon black (for example, acetylene black, Ketjenblack^{®} (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven fabric sheet obtained through pyrolysis of non-woven fabric formed of polymer fiber; and fibers, foils, and the like of various metals. One of these conductive materials can be used individually, or a plurality of these conductive materials can be used in combination.

No specific limitations are placed on the content of the conductive material. For example, the content of the conductive material based on the total mass of the composite particles is preferably 0.5 mass% or more, and more preferably 1.0 mass% or more, and is preferably 5 mass% or less, and more preferably 3 mass% or less. When the content of the conductive material in the composite particles is within any of the ranges set forth above, electrical resistance can be reduced well in a situation in which an electrode mixed material layer is formed.

### <Binder>

A conjugated diene polymer, an acrylic polymer, an aromatic vinyl block polymer, a fluoropolymer, a cellulosic polymer, a cycloolefinic polymer, or the like, for example, can be used as the binder without any specific limitations. One of these binders may be used individually, or two or more of these binders may be used in combination.

The conjugated diene polymer is a polymer that includes a conjugated diene monomer unit. Specific examples of the conjugated diene polymer include, but are not specifically limited to, a copolymer that includes an aromatic vinyl monomer unit and an aliphatic conjugated diene monomer unit (for example, a styrene-butadiene copolymer (SBR)), butadiene rubber (BR), acrylic rubber (NBR) (copolymer including an acrylonitrile unit and a butadiene unit), and hydrogenated products thereof.

The acrylic polymer may be a polymer that includes a cross-linkable monomer unit, a (meth)acrylic acid ester monomer unit, and an acidic group-containing monomer unit, for example, but is not specifically limited thereto. The proportion constituted by the (meth)acrylic acid ester monomer unit in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less.

The aromatic vinyl block polymer may be a block polymer that includes a block region formed of an aromatic vinyl monomer unit. The aromatic vinyl monomer may be styrene, styrene sulfonic acid or a salt thereof, α-methylstyrene, p-t-butylstyrene, butoxystyrene, vinyltoluene, chlorostyrene, or vinylnaphthalene, for example, of which, styrene is preferable. The aromatic vinyl block polymer is preferably a styrene-isoprene-styrene block copolymer, a styrene-butadiene-styrene copolymer, a hydrogenated product of either thereof, or the like.

The fluoropolymer is a polymer that includes a fluorine-containing monomer unit and that may further include a unit of a monomer that does not include fluorine (non-fluorine-containing monomer). The fluorine-containing monomer may be vinylidene fluoride, tetrafluoroethylene, hexafluoropropylene, trifluorovinyl chloride, vinyl fluoride, trifluoroethylene, trifluorochloroethylene, 2,3,3,3-tetrafluoropropene, a perfluoroalkyl vinyl ether, or the like, for example, but is not specifically limited thereto. The fluoropolymer may be polytetrafluoroethylene, polychlorotrifluoroethylene, polyvinylidene fluoride, polyvinyl fluoride, a perfluoroalkoxy fluororesin, a tetrafluoroethylene-hexafluoropropylene copolymer, an ethylene-tetrafluoroethylene copolymer, an ethylene-chlorotrifluoroethylene copolymer, a vinylidene fluoride-hexafluoropropylene copolymer, or the like, but is not specifically limited thereto.

The cellulosic polymer may be cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or the like, for example, but is not specifically limited thereto.

The cycloolefinic polymer may be a polymer (addition polymer or ring-opened polymer) synthesized using a cycloolefin compound as a monomer or a hydrogenated product thereof, or may be a hydrogenated product of a polymer obtained using an aromatic vinyl compound as a monomer, for example, but is not specifically limited thereto. Of these examples, a hydrogenated product of a ring-opened polymer obtained using a cycloolefin compound as a monomer and a hydrogenated product of a polymer obtained using an aromatic vinyl compound as a monomer are preferable due to the ease of adjusting the degree of swelling in electrolyte solution and glass-transition temperature to suitable magnitudes.

Examples of the cycloolefin compound include, but are not specifically limited to:
norbornenes that are unsubstituted or include an alkyl group such as norbornene, 5-methylnorbornene, 5-ethylnorbornene, 5-butylnorbornene, 5-hexylnorbornene, 5-decylnorbornene, 5-cyclohexylnorbornene, and 5-cyclopentylnorbornene;
norbornenes that include an alkenyl group such as 5-ethylidenenorbornene, 5-vinylnorbornene, 5-propenylnorbornene, 5-cyclohexenylnorbornene, and 5-cyclopentenylnorbornene;
norbornenes that include an aromatic ring such as 5-phenylnorbornene;
norbornenes that include an oxygen atom-containing polar group such as 5-methoxycarbonylnorbornene, 5-ethoxycarbonylnorbornene, 5-methyl-5-methoxycarbonylnorbornene, 5-methyl-5-ethoxycarbonylnorbornene, norbornenyl-2-methylpropionate, norbornenyl-2-methyloctanate, 5-hydroxymethylnorbornene, 5,6-di(hydroxymethyl)norbornene, 5,5-di(hydroxymethyl)norbornene, 5-hydroxy-i-propylnorbornene, 5,6-dicarboxynorbornene, and 5-methoxycarbonyl-6-carboxynorbornene;
norbornenes that include a nitrogen atom-containing polar group such as 5-cyanonorbornene;
polycyclic norbornenes including three or more rings that do not include an aromatic ring structure such as dicyclopentadiene, methyldicyclopentadiene, and tricyclo[5.2.1.02,6]dec-8-ene;
polycyclic norbornenes including three or more rings that include an aromatic ring such as tetracyclo[9.2.1.02,10.03,8]tetradeca-3,5,7,12-tetraene (also referred to as 1,4-methano-1,4,4a,9a-tetrahydro-9H-fluorene) and tetracyclo[10.2.1.02,11.04,9]pentadeca-4,6,8,13-tetraene (also referred to as 1,4-methano-1,4,4a,9,9a,10-hexahydroanthracene);
tetracyclododecenes that are unsubstituted or include an alkyl group such as tetracyclododecene, 8-methyltetracyclododecene, 8-ethyltetracyclododecene, 8-cyclohexyltetracyclododecene, 8-cyclopentyltetracyclododecene, and 8-methoxycarbonyl-8-methyltetracyclo[4.4.0.12,5.17,10]-3-dodecene;
tetracyclododecenes that include a double bond outside of a ring such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene;
tetracyclododecenes that include an aromatic ring such as 8-phenyltetracyclododecene;
tetracyclododecenes that include an oxygen atom-containing substituent such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride;
tetracyclododecenes that include a nitrogen atom-containing substituent such as 8-cyanotetracyclododecene and tetracyclododecene-8,9-dicarboxylic acid imide;
tetracyclododecenes that include a halogen atom-containing substituent such as 8-chlorotetracyclododecene;
tetracyclododecenes that include a silicon atom-containing substituent such as 8-trimethoxysilyltetracyclododecene; and
hexacycloheptadecenes such as a Diels-Alder adduct of a tetracyclododecene such as described above and cyclopentadiene.

No specific limitations are placed on the content of the binder. For example, the content of the binder based on the total mass of the composite particles is preferably 0.5 mass% or more, and more preferably 1.0 mass% or more, and is preferably 5 mass% or less, and more preferably 3 mass% or less. When the content of the binder in the composite particles is not less than any of the lower limits set forth above, high-temperature storage characteristics of an obtained electrochemical device can be enhanced. Moreover, when the content of the binder in the composite particles is not more than any of the upper limits set forth above, rollability of an obtained electrode can be even further increased.

### <Particle diameter distribution of composite particles>

The composite particles are required to have a D50 of not less than 20 µm and not more than 250 µm and a D90/D10 of not less than 2 and not more than 30 in a volume-based particle diameter distribution. The particle diameter distribution of the composite particles can be adjusted by altering production conditions in the subsequently described method of producing composite particles, by performing a classification operation with respect to the composite particles, and so forth.

### [Value of D50 in particle diameter distribution of composite particles]

The value of D50 in the particle diameter distribution of the composite particles is preferably 30 µm or more, and more preferably 40 µm or more, and is preferably 200 µm or less, and more preferably 150 µm or less. When the value of D50 in the particle diameter distribution of the composite particles is not less than any of the lower limits set forth above, high-temperature storage characteristics of an obtained electrochemical device can be enhanced. Moreover, when the value of D50 in the particle diameter distribution of the composite particles is not more than any of the upper limits set forth above, area density stability and rollability of an obtained electrode can be increased.

### [Value of D90/D10 in particle diameter distribution of composite particles]

The value of D90/D10 in the particle diameter distribution of the composite particles is preferably 3 or more, and more preferably 5 or more, and is preferably 25 or less, and more preferably 20 or less. When the value of D90/D10 in the particle diameter distribution of the composite particles is within any of the ranges set forth above, area density stability and rollability of an obtained electrode can be increased, and high-temperature storage characteristics of an obtained electrochemical device can be enhanced.

### <Proportion constituted by carbon atoms at surfaces of composite particles>

The proportion constituted by carbon atoms at surfaces of the composite particles is required to be not less than 20 mass% and not more than 70 mass%. Moreover, the proportion constituted by carbon atoms at surfaces of the composite particles is preferably 25 mass% or more, and more preferably 30 mass% or more, and is preferably 65 mass% or less, and more preferably 60 mass% or less. When the proportion constituted by carbon atoms at surfaces of the composite particles is not less than any of the lower limits set forth above, high-temperature storage characteristics of an obtained electrochemical device can be enhanced. Moreover, when the proportion constituted by carbon atoms at surfaces of the composite particles is not more than any of the upper limits set forth above, area density stability and rollability of an obtained electrode can be even further increased. Note that the proportion constituted by carbon atoms at surfaces of the composite particles can be controlled based on production conditions in production of the composite particles.

### (Method of producing composite particles)

The presently disclosed method of producing composite particles includes: performing preliminary stirring by stirring a powder material containing electrode active material particles having a number-based median diameter of primary particles of not less than 0.2 µm and not more than 4 µm to place the powder material in a stirred state (preliminary stirring step); and performing stirring granulation by adding a binder to the powder material in the stirred state and obtaining composite particles having a D50 of not less than 20 µm and not more than 250 µm and a D90/D10 of not less than 2 and not more than 30 in a volume-based particle diameter distribution (stirring granulation step). An electrode that is formed using composite particles produced according to the presently disclosed production method set forth above has excellent area density stability and rollability. Moreover, an electrochemical device that includes this electrode has excellent high-temperature storage characteristics. Note that electrode active material particles, a conductive material, and a binder that are used in the steps described in detail below can be any of those that were previously described. Moreover, the steps described in detail below can be performed inside of a granulation tank that includes a stirring member such as an agitator.

### <Preliminary stirring step>

In the preliminary stirring step, a powder material containing electrode active material particles is stirred to place the powder material in a stirred state. In the preliminary stirring step, aggregates of the electrode active material particles can be caused to disintegrate in the presence of a conductive material. The term "aggregate of electrode active material particles" refers to an aggregate resulting from a plurality of electrode active material particles that are formed of a plurality of primary particles further aggregating and joining together. The disintegration step is preferably performed as a dry process (i.e., under conditions where a liquid medium such as water is not present). In other words, the powder material that contains at least electrode active material particles and that can optionally contain a conductive material is preferably in a dry state at an end point of the preliminary stirring step.

### <Stirring granulation step>

In the stirring granulation step, a binder is added to the powder material in the stirred state to obtain composite particles having a D50 of not less than 20 µm and not more than 250 µm and a D90/D10 of not less than 2 and not more than 30 in a volume-based particle diameter distribution. The binder can be dissolved or dispersed in a solvent to be used in a dispersed liquid state. Any solvent can be used as the solvent without any specific limitations so long as the above-described binder can be dissolved or dispersed therein. In particular, the solvent may be cyclohexane, n-hexane, acetone, methyl ethyl ketone, ethyl acetate, tetrahydrofuran, methylene chloride, chloroform, or the like. One of these solvents may be used individually, or two or more of these solvents may be used in combination in a freely selected ratio.

A particle adjustment step of stirring the powder material in a stirring tank to perform particle adjustment can optionally be performed after completion of the stirring granulation step.

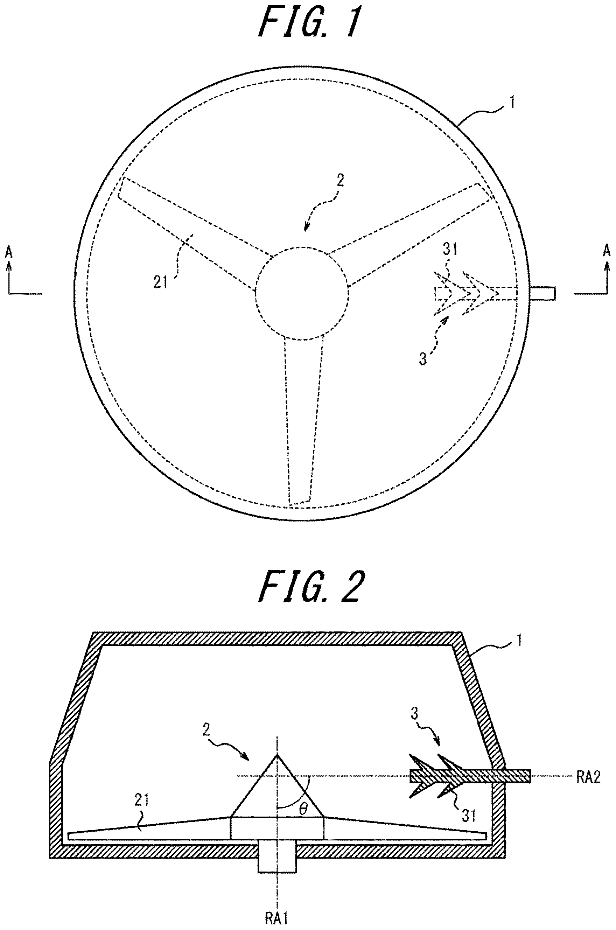

Note that although no specific limitations are made, the steps described above can efficiently be performed using a granulation tank 1 that is illustrated as one example in FIGS. 1 and 2. FIG. 1 is a plan view of the granulation tank 1, and FIG. 2 is a cross-sectional view at a sectioning line A-A indicated in FIG. 1. The granulation tank 1 includes a main agitator 2 and an auxiliary agitator 3 having a different stirring axis to the main agitator 2. The main agitator 2 includes main blades 21, though the form of the main agitator 2 is not specifically limited to the illustrated configuration. The auxiliary agitator 3 includes auxiliary blades 31, though the form of the auxiliary agitator 3 is not specifically limited to the illustrated configuration. Although not illustrated, the granulation tank 1 also includes at least one supply means such as a sprayer that is capable of supplying a liquid composition. Moreover, although not illustrated, the granulation tank 1 includes a powder material supply port and a discharge port configured so as to be capable of discharging composite particles that are formed. In FIG. 2, a stirring axis of the main agitator 2 is indicated by a dashed line as a first stirring axis RA1, and a stirring axis of the auxiliary agitator is indicated by a dashed line as a second stirring axis RA2. In FIG. 2, an angle θ that is formed by the first stirring axis RA1 and the second stirring axis RA2 is approximately 90°.

### (Electrode for electrochemical device)

The presently disclosed electrode includes at least an electrode mixed material layer containing the presently disclosed composite particles. The electrode mixed material layer is disposed on at least one side of an electrode substrate. The presently disclosed electrode has excellent area density stability and rollability as a result of including an electrode mixed material layer that contains the presently disclosed composite particles. Moreover, by using this electrode, it is possible to cause an electrochemical device to display excellent high-temperature storage characteristics.

### <Electrode substrate>

The electrode substrate is a material having electrical conductivity and electrochemical durability. Specifically, a current collector made of iron, copper, aluminum, nickel, stainless steel, titanium, tantalum, gold, platinum, or the like can be used as the electrode substrate. Note that one of the above-described materials may be used individually, or two or more of the above-described materials may be used in combination in a freely selected ratio.

### <Production method of electrode for electrochemical device>

The electrode for an electrochemical device includes performing pressure forming of the presently disclosed composite particles set forth above on an electrode substrate so as to form an electrode mixed material layer (pressure forming step). This production method enables efficient production of the presently disclosed electrode for an electrochemical device.

### <Pressure forming step>

The pressure forming operation can be performed according to a known method. For example, composite particles produced according to the presently disclosed production method can be supplied to a roll press and be subjected to roll pressing on an electrode substrate so as to perform pressure forming of the composite particles on the electrode substrate and form an electrode mixed material layer. The pressure during pressing can be set as appropriate in accordance with the target electrode density.

### (Electrochemical device)

An electrochemical device that is formed using the presently disclosed electrode for an electrochemical device set forth above may be a lithium ion secondary battery, an electric double-layer capacitor, or a lithium ion capacitor, for example, without any specific limitations, and may preferably be a lithium ion secondary battery. The electrochemical device formed using the presently disclosed electrode for an electrochemical device has excellent high-temperature storage characteristics.

Although the following describes, as one example, a case in which the electrochemical device is a lithium ion secondary battery, the present disclosure is not limited to the following example. A lithium ion secondary battery corresponding to the presently disclosed electrochemical device normally includes electrodes (positive electrode and negative electrode), an electrolyte solution, and a separator and has the presently disclosed electrode for an electrochemical device as at least one of the positive electrode and the negative electrode.

### <Electrodes>

Any known electrode can be used without any specific limitations as an electrode other than the presently disclosed electrode for an electrochemical device set forth above that can be used in the lithium ion secondary battery corresponding to the electrochemical device. Specifically, an electrode obtained by forming an electrode mixed material layer on a current collector by a known production method can be used as an electrode other than the electrode for an electrochemical device set forth above.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. The concentration of the electrolyte in the electrolyte solution can be adjusted as appropriate. Known additives such as vinylene carbonate, fluoroethylene carbonate, and ethyl methyl sulfone may be added to the electrolyte solution.

### <Separator>

Any known separator can be used without any specific limitations as the separator. In particular, a microporous membrane formed of a polyolefinic (polyethylene, polypropylene, polybutene, or polyvinyl chloride) resin is preferable. Moreover, the separator may be a functional layer-equipped separator that includes a functional layer (porous membrane layer or adhesive layer) at one side or both sides of a separator substrate.

### <Production method of lithium ion secondary battery>

The lithium ion secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

Measurements and evaluations of various attributes in the examples and comparative examples were performed according to the following methods.

### <Particle diameter distribution of composite particles>

Measurement of a particle diameter distribution (volume-based) of composite particles was performed based on JIS Z 8825:2013 using a dry laser diffraction/scattering particle size analyzer (Microtrac MT-3200II produced by Nikkiso Co., Ltd.). Based on the particle diameter distribution obtained through this measurement, the value of a particle diameter (D50) at which cumulative volume calculated from a small diameter end reached 50% and a value D90/D10 determined by dividing a value of a particle diameter (D90) at which cumulative volume calculated from the small diameter end reached 90% by a value of a particle diameter (D10) at which cumulative volume calculated from the small diameter end reached 10% were calculated.

### <Surface carbon content of composite particles>

The surface carbon content of composite particles was confirmed by SEM/EDX (scanning electron microscopy/energy dispersive X-ray spectroscopy; JSM-7800F produced by JEOL, Ltd.) under conditions of an accelerating voltage of 15 kV and an LED (Lower Electron Detector). Specifically, a mass ratio (mass%) of carbon atoms was calculated for composite particles in 10 observation fields with an observation magnification of ×50,000 by taking all constituent components in the entirety of these composite particles to be 100 mass%.

### <Primary particle diameter of electrode active material particles>

Electrode active material particles were observed using an SEM (scanning electron microscope; JSM-7800F produced by JEOL, Ltd.) under conditions of an accelerating voltage of 1 kV and an LED (Lower Electron Detector). The "particle diameter of a primary particle of the electrode active material particles" was defined as the diameter of a circumscribed circle of a primary particle taken as a subject. Specifically, 100 primary particles were randomly selected from an SEM image at an observation magnification of ×50,000, and then a number-based median diameter was calculated based on data for the diameters of circumscribed circles obtained for these primary particles.

### <Surface elemental analysis of electrode active material particles>

Electrode active material particles were analyzed by Auger electron spectroscopy to measure the content (mol%) of target elements at surfaces of the electrode active material particles. The target elements were Al, Zr, W, Ti, Mg, Ta, Nb, Mo, Ir, Sc, V, Cr, and Hf.

### <True specific gravity of electrode active material particles>

The true specific gravity of an electrode active material was measured in accordance with JIS Z 8807:2012.

### <Area density stability of electrode>

The area density of a positive electrode for a lithium ion secondary battery produced in each example or comparative example was measured at 5 arbitrary locations within an area of 20 cm². This measurement was performed by punching out 2 cm² of the electrode, measuring the weight of the punched out electrode, and calculating the weight per cm² from the weight of the mixed material layer exclusive of the current collector. Less variation of film thickness means that uniform movement of lithium inside a battery is facilitated and resistance is reduced.
A: In-plane variation of less than 1.5%
B: In-plane variation of not less than 1.5% and less than 3%
C: In-plane variation of not less than 3% and less than 5%
D: In-plane variation of 5% or more

### <Rollability>

A positive electrode obtained in each example or comparative example was punched out with a circular disc shape of 12 mm in diameter, was compressed at a temperature of 25°C and a pressure of 254 MPa for 10 seconds using a flat plate pressing machine, and pressability was evaluated by the following standard. A larger value for density indicates that the positive electrode mixed material layer has better pressability.
A: Density of 3.40 g/cm³ or more
B: Density of not less than 3.30 g/cm³ and less than 3.40 g/cm³
C: Density of not less than 3.20 g/cm³ and less than 3.30 g/cm³
D: Density of less than 3.20 g/cm³ or not measurable due to mixed material slipping

### <Measurement of IV resistance after high-temperature storage>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging of the lithium ion secondary battery was performed with a 0.2C constant current (upper limit cell voltage: 4.20 V) and CC discharging of the lithium ion secondary battery was performed to a cell voltage of 3.00 V with a 0.2C constant current. Initial IV resistance was subsequently measured as follows. The lithium ion secondary battery was charged to an SOC (State Of Charge) of 50% at 1C (C is a value expressed by rated capacity (mA)/1 h (hours)). Thereafter, the lithium ion secondary battery was subjected to 20 seconds of charging and 20 seconds of discharging at each of 0.5C, 1.0C, 1.5C, and 2.0C, centered on an SOC of 50%. The battery voltage after 20 seconds in each of these cases (charging side and discharging side) was plotted against the current value, and the gradient of this plot was determined as the IV resistance (Ω) (IV resistance during charging and IV resistance during discharging). The lithium ion secondary battery was subsequently CC-CV charged with a 0.2C constant current (upper limit cell voltage: 4.20 V). Next, the lithium ion secondary battery was stored for 4 weeks inside of an inert oven in which the inside of a treatment chamber was set as a 60°C nitrogen atmosphere. Thereafter, the IV resistance after high-temperature storage was measured by the same method as the initial IV resistance. A rate of change (%) was calculated for the obtained value (Ω) of IV resistance after the high-temperature storage test based on the value (Ω) of initial IV resistance. The rate of change was evaluated by the following standard.

A smaller rate of change of IV resistance (%) between before and after the high-temperature storage test indicates that internal resistance is reduced over a long period and that the lithium ion secondary battery has better high-temperature storage characteristics.
A: Rate of change of IV resistance of less than 40%
B: Rate of change of IV resistance of not less than 40% and less than 50%
C: Rate of change of IV resistance of not less than 50% and less than 65%
D: Rate of change of IV resistance of 65% or more

### (Example 1)

### <Production method of binder A>

A reactor that included a stirring device and that had been thoroughly internally purged with nitrogen was charged with 270 parts of dehydrated cyclohexane and 0.53 parts of ethylene glycol dibutyl ether, and then 0.47 parts of n-butyllithium (15% cyclohexane solution) was further added thereto. All contents of the reactor were stirred at 60°C while 12.5 parts of dehydrated styrene was continuously added into the reactor over 40 minutes. Once this addition was complete, all contents of the reactor were further stirred in this state at 60°C for 20 minutes. The polymerization conversion rate at this point was determined to be 99.5% upon measurement of the reaction liquid by gas chromatography. Next, 75.0 parts of dehydrated isoprene was continuously added to the reaction liquid over 100 minutes, and stirring was continued in this state for 20 minutes after completion of the addition. The polymerization conversion rate at this point was 99.5%. Thereafter, a further 12.5 parts of dehydrated styrene was continuously added over 60 minutes, and stirring of all contents of the reactor was continued in this state for 30 minutes after completion of this addition. The polymerization conversion rate at this point was almost 100%.

At this point, 0.5 parts of isopropyl alcohol was added to the reaction liquid to stop the reaction. The resultant polymer solution was transferred to a pressure-resistant reactor including a stirring device, 7.0 parts of nickel catalyst supported on diatomaceous earth carrier (produced by JGC Catalysts and Chemicals Ltd.; product name: E22U; supported nickel content: 60%) as a hydrogenation catalyst and 80 parts of dehydrated cyclohexane were added thereto, and mixing was performed. The inside of the reactor was purged with hydrogen gas, and hydrogen was also supplied into the reactor while stirring the solution so as to perform a hydrogenation reaction at a temperature of 190°C and a pressure of 4.5 MPa for 6 hours.

Once the hydrogenation reaction was complete, the reaction solution was filtered to remove the hydrogenation catalyst, and then 1.0 parts of a xylene solution having 0.1 parts of pentaerythrityl tetrakis[3-(3,5-di-t-butyl-4-hydroxyphenyl)propionate] (produced by KOYO Chemical Research Center; product name: Songnox 1010) dissolved therein as a phenolic antioxidant was added to and dissolved in the filtrate. Cyclohexane was further added to produce a binder A solution having a solid content concentration of 10 mass%.

### <Production of composite particles>

A composite particle production device including a circular tube shaped vessel having an internal diameter of 180 mm and an internal capacity of 2 L and including agitators at two axes in a vertical direction (axial direction of circular tube shaped vessel) and a horizontal direction (vertical direction corresponding to main agitator and horizontal direction corresponding to auxiliary agitator) inside of the circular tube shaped vessel was prepared as a granulation tank. Note that the main agitator was an inclined paddle including three main blades of 170 mm in diameter, and the auxiliary agitator had a V-type anchor blade of 30 mm in diameter. A mechanism by which feedstock was prevented from entering driving parts of the main agitator and the auxiliary agitator through sealing by air ventilation was also included. The composite particle production device was used to perform a preliminary stirring step (i), a stirring granulation step (ii), and a particle adjustment step (iii) in stated order to produce composite particles.

First, as step (i), 96 parts by mass (1,344 g) of NCM622 (number-average primary particle diameter: 2 µm; Zr: 0.5 mol%) as a positive electrode active material for a lithium ion battery and 2 parts by weight (28 g) of carbon black (BET specific surface area: 62 m²/g; bulk density: 0.16 g/cm³) as a conductive material were loaded into the granulation tank. Next, ventilation with 20 L/min (ventilation rate: 10/min) of air for agitator sealing was performed, and 15 minutes of stirring was performed under operating conditions of a main agitator circumferential speed of 5 m/s and an auxiliary agitator circumferential speed of 6 m/s.

Next, as step (ii), ventilation with 20 L/min (ventilation rate: 10/min) of air for agitator sealing was performed, and 2 parts by mass of solid content (280 g) of the binder A solution (solid content concentration: 10 mass%; viscosity index: 200 mPa·s; solvent: cyclohexane) was continuously added over 15 minutes under operating conditions of a main agitator circumferential speed of 5 m/s and an auxiliary agitator circumferential speed of 6 m/s.

Next, as step (iii), ventilation with 20 L/min (ventilation rate: 10/min) of air for agitator sealing was performed, and operation was performed for 10 minutes under operating conditions of a main agitator circumferential speed of 2 m/s and an auxiliary agitator circumferential speed of 2 m/s. Various measurements were performed with respect to the produced composite particles. The results are shown in Table 1.

### <Production of positive electrode for lithium ion secondary battery>

The composite particles produced as described above were supplied to pressing rolls (roll temperature: 100°C; pressing line pressure: 500 kN/m) of a roll press (Press Cutting Rough Surface Hot Roll produced by Hirano Gikenkogyo Co., Ltd.) using a metering feeder (NIKKA K-V SPRAYER produced by Nikka Ltd.). Aluminum foil of 20 µm in thickness was inserted between the pressing rolls, the composite particles supplied from the metering feeder were attached onto the aluminum foil, and pressure forming was performed with a forming rate of 1.5 m/min to obtain a positive electrode web for a lithium ion secondary battery including a positive electrode active material layer having an area density of 30 mg/cm². This positive electrode web was rolled by roll pressing to produce a sheet-shaped positive electrode including the aluminum foil and a positive electrode mixed material layer of 3.5 g/cm³ in density.

### <Production of negative electrode for lithium ion secondary battery>

A 5 MPa pressure-resistant vessel equipped with a stirrer was charged with 33 parts of 1,3-butadiene as an aliphatic conjugated diene monomer, 3.5 parts of itaconic acid as an acidic group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). This mixture was adjusted to pH 8 through addition of 5% sodium hydroxide aqueous solution and was subsequently subjected to thermal-vacuum distillation to remove unreacted monomer. Thereafter, the mixture was cooled to 30°C or lower to obtain a water dispersion containing a binder for a negative electrode.

Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% using deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. Next, deionized water was added so as to adjust the viscosity to 3,000 ± 500 mPa·s (measured by B-type viscometer at 25°C and 60 rpm) and thereby produce a slurry for a negative electrode mixed material layer.

Copper foil of 15 µm in thickness was then prepared as a current collector. The slurry for a negative electrode mixed material layer was applied onto the copper foil such as to have a coating weight after drying of 15 mg/cm² and was dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including the copper foil and negative electrode mixed material layers (both sides) of 1.6 g/cm³ in density.

### <Production of lithium ion secondary battery>

The positive electrode and negative electrode described above and a separator (made of polyethylene; thickness: 12 µm) were used to produce a single-layer laminate cell (discharge capacity equivalent to 250 mAh) and were arranged inside aluminum packing. Thereafter, the inside of the aluminum packing was filled with a LiPF₆ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) as an electrolyte solution. The aluminum packing was then closed by heat sealing at a temperature of 150°C to tightly seal an opening of the aluminum packing and thereby produce a lithium ion secondary battery. This lithium ion secondary battery was used to evaluate high-temperature storage characteristics. The result is shown in Table 1.

### (Example 2)

Various steps and measurements were performed in the same way as in Example 1 with the exception that the positive electrode active material was changed to NCM622 containing 0.5 mol% of W. The results are shown in Table 1.

### (Example 3)

Various steps and measurements were performed in the same way as in Example 1 with the exception that the positive electrode active material was changed to NCM622 containing 0.07 mol% of Zr. The results are shown in Table 1.

### (Example 4)

Various steps and measurements were performed in the same way as in Example 1 with the exception that the positive electrode active material was changed to NCM622 containing 1.8 mol% of Zr. The results are shown in Table 1.

### (Example 5)

Various steps and measurements were performed in the same way as in Example 1 with the exception that LFP (primary particle diameter: 0.3 µm; containing 0.5 mol% of Zr) was used as the positive electrode active material. The results are shown in Table 1.

### (Example 6)

Various steps and measurements were performed in the same way as in Example 1 with the exception that NCM622 (containing 0.5 mol% of Zr) having a primary particle diameter of 0.3 µm was used as the positive electrode active material. The results are shown in Table 1.

### (Example 7)

Various steps and measurements were performed in the same way as in Example 1 with the exception that a binder B produced as described below was used as the binder. The results are shown in Table 1.

### <Production of binder B>

In a reactor having an internal capacity of 10 L, 100 parts of deionized water, 35 parts of acrylonitrile as a nitrile group-containing monomer, and 65 parts of 1,3-butadiene as an aliphatic conjugated diene monomer were loaded, 2 parts of potassium oleate as an emulsifier, 0.1 parts of potassium phosphate as a stabilizer, and 0.4 parts of tert-dodecyl mercaptan (TDM) as a molecular weight modifier were added thereto, and emulsion polymerization was performed at a temperature of 530°C in the presence of 0.35 parts of potassium persulfate as a polymerization initiator to cause copolymerization of acrylonitrile and 1,3-butadiene.

At the point at which the polymerization conversion rate reached 95%, 0.2 parts of hydroxylamine sulfate was added per 100 parts of monomer to stop the polymerization. Next, heating was performed and then steam distillation was performed under reduced pressure at approximately 90°C to recover residual monomer. Thereafter, 0.1 parts of dibutylhydroxytoluene (BHT) as a substituted phenol was added to obtain a water dispersion of a polymer.

A 25 mass% aqueous solution of calcium chloride (CaCl₂) was added as a coagulant under stirring in an amount such that the amount of calcium chloride was 3 parts relative to 100 parts of polymer solid content in the obtained water dispersion so as to cause coagulation of the polymer in the water dispersion. Thereafter, the polymer was filtered off and was water washed by passing deionized water in an amount 50 times that of the obtained polymer. The polymer was subsequently dried under reduced pressure at a temperature of 90°C to yield a polymer precursor.

Next, the polymer precursor was hydrogenated by adopting an oil-layer hydrogenation method as a hydrogenation method. The polymer precursor was dissolved in acetone such that the concentration thereof was 12% to obtain an acetone solution of the polymer precursor as a hydrogenation subject. This acetone solution of the polymer precursor was loaded into an autoclave, 500 ppm of palladium/silica (Pd/SiO₂) as a catalyst was added relative to 100% of the polymer precursor serving as a hydrogenation subject, and then a hydrogenation reaction was performed at a hydrogen pressure of 3.0 MPa and a temperature of 90°C for 6 hours to yield a hydrogenation reaction product. Once the hydrogenation reaction was complete, the palladium/silica was filtered off, and acetone was added such as to give a solid content concentration of 10 mass% (viscosity index: 400 mPa·) and yield a binder B solution.

### (Example 8)

Various steps and operations were performed in the same way as in Example 1 with the exception that a conductive material was not compounded in the powder material in step (i) and that a conductive material was instead supplied as a dispersion liquid in step (ii). The results are shown in Table 1.

### <Production of conductive material dispersion liquid>

A conductive material dispersion liquid having a solid content concentration of 18.2% was produced by using a disper blade to stir (3,000 rpm, 10 minutes) 30 g of carbon black (BET specific surface area: 62 m²/g; bulk density: 0.16 g/cm³) as a conductive material and 300 g of the binder A solution (solid content concentration: 10 mass%; binder solution viscosity index: 200 mPa·s; solvent: cyclohexane) and subsequently using a bead mill in which zirconia beads of 1 mm in diameter were used to perform 1 hour of mixing at a circumferential speed of 8 m/s.

### <Production of composite particles>

A granulation tank having the same structure as that in Example 1 was used.

In a preliminary stirring step (i), 96 parts by weight (1,344 g) of NCM622 (number-average primary particle diameter: 2 µm; Zr: 0.5 mol%) as a positive electrode active material for a lithium ion battery was loaded into the granulation tank. Next, ventilation with 20 L/min (ventilation rate: 10/min) of air for agitator sealing was performed, and 15 minutes of stirring was performed under operating conditions of a main agitator circumferential speed of 5 m/s and an auxiliary agitator circumferential speed of 6 m/s.

Next, in a stirring granulation step (ii), ventilation with 20 L/min (ventilation rate: 10/min) of air for agitator sealing was performed, and the conductive material dispersion liquid produced as described above (solid content concentration 18.2%, 308 g) was continuously added over 15 minutes under operating conditions of a main agitator circumferential speed of 5 m/s and an auxiliary agitator circumferential speed of 6 m/s such that, in terms of solid content, 2 parts of carbon black and 2 parts of the binder A were added.

Next, as a particle adjustment step (iii), ventilation with 20 L/min (ventilation rate: 10/min) of air for agitator sealing was performed, and operation was performed for 10 minutes under operating conditions of a main agitator circumferential speed of 2 m/s and an auxiliary agitator circumferential speed of 2 m/s. Various measurements were performed with respect to the produced composite particles. The results are shown in Table 1.

### (Example 9)

Various operations and measurements were performed in the same way as in Example 1 with the exception that in production of the composite particles, the operating conditions of step (ii) described in Example 1 were changed by lowering the circumferential speed of both the main agitator and the auxiliary agitator such that attributes of the composite particles changed as shown in Table 1. The results are shown in Table 1.

### (Example 10)

Various operations and measurements were performed in the same way as in Example 1 with the exception that in production of the composite particles, the operating conditions of step (iii) described in Example 1 were changed by raising the circumferential speed of both the main agitator and the auxiliary agitator such that attributes of the composite particles changed as shown in Table 1. The results are shown in Table 1.

### (Example 11)

Various operations and measurements were performed in the same way as in Example 1 with the exception that in production of the composite particles, the duration of step (iii) described in Example 1 was increased such that attributes of the composite particles changed as shown in Table 1. The results are shown in Table 1.

### (Comparative Example 1)

Various operations and measurements were performed in the same way as in Example 1 with the exception that NCM622 having a primary particle diameter of 0.1 µm was used as the positive electrode active material particles. The results are shown in Table 2.

### (Comparative Example 2)

Various operations and measurements were performed in the same way as in Example 1 with the exception that NCM622 having a primary particle diameter of 7 µm was used as the positive electrode active material particles. The results are shown in Table 2.

### (Comparative Example 3)

Various operations and measurements were performed in the same way as in Example 1 with the exception that in production of the composite particles, the operating conditions of step (i) described in Example 1 were changed by lowering the circumferential speed of both the main agitator and the auxiliary agitator, the operating conditions of step (ii) described in Example 1 were changed by lowering the circumferential speed of both the main agitator and the auxiliary agitator, and the duration of step (ii) was increased such that attributes of the composite particles changed as shown in Table 2. The results are shown in Table 2.

### (Comparative Example 4)

Various operations and measurements were performed in the same way as in Example 1 with the exception that composite particles obtained by performing classification as described below with respect to the composite particles produced in Example 1 were used. The results are shown in Table 2.

In the classification, sifting was performed using a sifting screen having an opening size of 85 µm, and coarse particles on the sifting screen were removed. In addition, composite particles under the sifting screen were sifted using a sifting screen having an opening size of 65 µm, particles under the sifting screen were removed, and composite particles remaining on the sifting screen were used in evaluation.

### (Comparative Example 5)

Various operations and measurements were performed in the same way as in Example 1 with the exception that in production of the composite particles, the operating conditions of step (ii) described in Example 1 were changed by raising the circumferential speed of both the main agitator and the auxiliary agitator and the duration of step (ii) was reduced such that attributes of the composite particles changed as shown in Table 2. The results are shown in Table 2.

### (Comparative Example 6)

Various operations and measurements were performed in the same way as in Example 1 with the exception that in production of the composite particles, the operating conditions of step (ii) described in Example 1 were changed by lowering the circumferential speed of both the main agitator and the auxiliary agitator such that attributes of the composite particles changed as shown in Table 2. The results are shown in Table 2.

**[Table 1]**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Materials | Electrode active material particles | Type | NCM622 | NCM622 | NCM622 | NCM622 | LFP | NCM622 | NCM622 | NCM622 | NCM622 | NCM622 | NCM622 |
| | | Element type | Zr | w | Zr | Zr | Zr | Zr | Zr | Zr | Zr | Zr | Zr |
| | | Element content [mol%] | 0.5 | 0.5 | 0.07 | 1.8 | 0.5 | 0.5 | 0.5 | 0.5 | 0.5 | 0.5 | 0.5 |
| | | True specific gravity [-] | 4.4 | 4.4 | 4.4 | 4.4 | 3.6 | 4.4 | 4.4 | 4.4 | 4.4 | 4.4 | 4.4 |
| | | Amount [parts by mass] | 96 | 96 | 96 | 96 | 96 | 96 | 96 | 96 | 96 | 96 | 96 |
| | | Primary particle diameter [µm] (median diameter) | 2 | 2 | 2 | 2 | 0.3 | 0.3 | 2 | 2 | 2 | 2 | 2 |
| | Conductive material | Type | Carbon black | Carbon black | Carbon black | Carbon black | Carbon black | Carbon black | Carbon black | Carbon black (dispersion liquid) | Carbon black | Carbon black | Carbon black |
| | | Amount [parts by mass] | 2 | 2 | 2 | 2 | 2 | 2 | 2 | 2 | 2 | 2 | 2 |
| | Binder | Type | Binder A | Binder A | Binder A | Binder A | Binder A | Binder A | Binder B | Binder A | Binder A | Binder A | Binder A |
| | | Amount [parts by mass] | 2 | 2 | 2 | 2 | 2 | 2 | 2 | 2 | 2 | 2 | 2 |
| Composite particles | Particle diameter D50 [µm] | | 75 | 75 | 75 | 75 | 75 | 75 | 75 | 75 | 180 | 75 | 75 |
| | D90/D10 [-] | | 15 | 15 | 15 | 15 | 15 | 15 | 15 | 15 | 18 | 24 | 4 |
| | Surface carbon content [mass%] | | 40 | 40 | 40 | 40 | 40 | 40 | 50 | 50 | 28 | 40 | 40 |
| Evaluation | Area density stability | | A | A | A | B | B | A | B | A | B | B | B |
| | Rollability | | A | A | B | A | B | A | A | A | B | B | B |
| | Resistance after high-temperature storage | | A | B | A | B | B | B | A | A | B | B | A |

**[Table 2]**

| | | | Comparative Example 1 | Comparative Example 2 | Comparative Example 3 | Comparative Example 4 | Comparative Example 4 | Comparative Example 5 | Comparative Example 6 |
|---|---|---|---|---|---|---|---|---|---|
| Materials | Electrode active material particles | Type | NCM622 | NCM622 | NCM622 | NCM622 | NCM622 | NCM622 | NCM622 |
| | | Element type | Zr | Zr | Zr | Zr | Zr | Zr | Zr |
| | | Element content [mol%] | 0.5 | 0.5 | 0.5 | 0.5 | 0.5 | 0.5 | 0.5 |
| | | True specific gravity [-] | 4.4 | 4.4 | 4.4 | 4.4 | 4.4 | 4.4 | 4.4 |
| | | Amount [parts by mass] | 96 | 96 | 96 | 96 | 96 | 96 | 96 |
| | | Primary particle diameter [µm] (median diameter) | 0.1 | 7 | 1.5 | 1.5 | 1.5 | 6 | 6 |
| | Conductive material | Type | Carbon black | Carbon black | Carbon black | Carbon black | Carbon black | Carbon black | Carbon black |
| | | Amount [parts by mass] | 2 | 2 | 2 | 2 | 2 | 2 | 2 |
| | Binder | Type | Binder A | Binder A | Binder A | Binder A | Binder A | Binder A | Binder A |
| | | Amount [parts by mass] | 2 | 2 | 2 | 2 | 2 | 2 | 2 |
| Composite particles | Particle diameter D50 [µm] | | 75 | 75 | 400 | 75 | 75 | 75 | 63 |
| | D90/D10 [-] | | 15 | 15 | 15 | 40 | 1.5 | 15 | 210 |
| | Surface carbon content [mass%] | | 50 | 50 | 50 | 50 | 50 | 10 | 80 |
| Evaluation | Area density stability | | C | C | D | D | D | C | D |
| | Rollability | | C | D | D | D | C | C | D |
| | Resistance after high-temperature storage | | D | C | C | C | C | D | C |

It can be seen from Table 1 that it was possible to provide an electrode with excellent area density stability and rollability in Examples 1 to 11 in which an electrode mixed material layer was formed using composite particles that contained electrode active material particles having a primary particle median diameter within a specific range, that had values for D50 and D90/D10 in a volume-based particle diameter distribution that were within specific ranges, and in which the proportion constituted by carbon atoms at surfaces of the composite particles was within a specific range.

### INDUSTRIAL APPLICABILITY

According to the present disclosure, it is possible to provide composite particles that can increase area density stability and rollability of an obtained electrode and a method of producing these composite particles.

Moreover, according to the present disclosure, it is possible to provide an electrode for an electrochemical device that has excellent area density stability and rollability and an electrochemical device that includes this electrode for an electrochemical device.

### REFERENCE SIGNS LIST

- 1: granulation tank
- 2: main agitator
- 21: main blade
- 3: auxiliary agitator
- 31: auxiliary blade
- RA1: first stirring axis
- RA2: second stirring axis

## Claims

1. Composite particles comprising electrode active material particles, a conductive material, and a binder, wherein
the electrode active material particles have a number-based median diameter of primary particles of not less than 0.2 µm and not more than 4.0 µm ,
the composite particles have a D50 of not less than 20 µm and not more than 250 µm and a D90/D10 of not less than 2 and not more than 30 in a volume-based particle diameter distribution, and
a proportion constituted by carbon atoms at surfaces of the composite particles is not less than 20 mass% and not more than 70 mass%.

2. The composite particles according to claim 1, wherein the electrode active material particles have a true specific gravity of not less than 3.5 and not more than 6.0.

3. The composite particles according to claim 1, wherein
the electrode active material particles contain one or more elements selected from the group consisting of Al, Zr, W, Ti, Mg, Ta, Nb, Mo, Ir, Sc, V, Cr, and Hf, and
a proportion constituted by the one or more elements in the electrode active material particles is not less than 0.05 mol% and not more than 2.0 mol%.

4. A method of producing composite particles containing electrode active material particles, a conductive material, and a binder, comprising:
performing preliminary stirring by stirring a powder material containing electrode active material particles having a number-based median diameter of primary particles of not less than 0.2 µm and not more than 4 µm to place the powder material in a stirred state; and
performing stirring granulation by adding a binder to the powder material in the stirred state and obtaining composite particles having a D50 of not less than 20 µm and not more than 250 µm and a D90/D10 of not less than 2 and not more than 30 in a volume-based particle diameter distribution.

5. The method of producing composite particles according to claim 4, wherein aggregates of the electrode active material particles are caused to disintegrate in the presence of a conductive material in the preliminary stirring.

6. The method of producing composite particles according to claim 5, wherein the preliminary stirring is performed as a dry process.

7. The method of producing composite particles according to claim 4, wherein a conductive material that is dispersed in a solvent is added to the powder material in the stirred state in the stirring granulation.

8. An electrode for an electrochemical device comprising an electrode mixed material layer containing the composite particles for an electrochemical device according to any one of claims 1 to 3.

9. An electrochemical device comprising the electrode for an electrochemical device according to claim 8.
